# EUROPÄISCHE PATENTSCHRIFT

(11) **EP 3 434 984 B1**
(45) Veröffentlichungstag und Bekanntmachung des Hinweises auf die Patenterteilung: **12.02.2020**
(21) Anmeldenummer: 18175082.9
(22) Anmeldetag: 30.05.2018
(51) Int. Cl.: F24D 19/00, B01D 35/06, B01D 35/147, B01D 29/11, B01D 29/23, B01D 29/35, B01D 29/66, B01D 29/70, F24D 3/10

(54) **HEIZUNGSFILTER-ANORDNUNG**
HEATING FILTER ARRANGEMENT
DISPOSITIF DE FILTRE DE CHAUFFAGE

(30) Priorität: 28.07.2017 DE 202017104526 U
(43) Veröffentlichungstag der Anmeldung: 30.01.2019
(73) Patentinhaber: Hans Sasserath GmbH & Co. KG., 41352 Korschenbroich (DE)
(72) Erfinder: Hecking, Willi, 41372 Niederkrüchten-Elmpt (DE)
(74) Vertreter: Weisse, Renate

(56) Entgegenhaltungen:
- DE-A1- 4 343 180
- DE-A1-102015 224 138
- DE-C1- 4 315 306
- DE-U1- 7 631 815
- DE-U1-202015 102 475

## Beschreibung

### Technisches Gebiet

Die Erfindung betrifft einen Heizungsfilter zum Herausfiltern von Partikeln aus Heizungswasser in einem Heizkreislauf enthaltend:
(a) ein Armaturengehäuse mit einem Einlass und einem Auslass zum Einbau in eine Rohrleitung des Heizkreislaufs; und
(b) ein strömungsmäßig zwischen Einlass und Auslass angeordnetes Filterelement.

In einem Heizungssystem wird Wasser in einem geschlossenen Kreislauf umgepumpt. Das Wasser wird erwärmt und zu den Heizkörpern geleitet. Dort gibt es seine Wärme ab. Anschließend wird es wieder zurück zur Heizung geleitet. Moderne Heizkörper und Wärmetauscher sollen möglichst kompakt ausgeführt werden. Die Anlagen sind dann zwar leistungsfähig, aber auch empfindlicher gegenüber Schmutz, Kalk und Gas, insbesondere Luft.

### Stand der Technik

Es ist bekannt, Wasser für geschlossene Heizkreisläufe zu reinigen, bevor sie in den Heizkreislauf eingespeist werden. Hierzu wird das Wasser separat entkalkt und gefiltert. Aus der EP 0 742 038 A2 ist eine Anordnung bekannt, bei der suspendierte Korrosionsprodukte und sonstige partikelförmige Verunreinigungen aus Heizwasserkreisläufen entfernt werden. Die Anordnung weist als Filtereinsatz eine Bürste auf. Die Bürste ist innerhalb des Kreislaufs angeordnet. Die Bürste weist einen Schaft auf, von dem Faserbündel abstehen. Partikel bleiben in dem Faserbündel hängen. Zur Reinigung der Bürste sind Abstreifelemente innerhalb des Gehäuses vorgesehen. Durch eine Relativbewegung zwischen den Faserbündeln und den Abstreifelementen werden die Partikel gelöst. Zum Reinigen des Filters müssen mehrere Griffe und Hähne betätigt werden. Dadurch ist die Anordnung vergleichsweise komplex. Nachteilig bei der bekannten Anordnung ist es auch, dass diese blockieren kann.

DE 202009000084 U1 der Anmelderin offenbart einen Heizungsfilter mit Rückspülung. Der Filter umfasst eine Filtertasse. In der Filtertasse ist eine Filterhülse angeordnet. In der Filterhülse befindet sich Filtermaterial in Form einer Stahlbürste. Zwischen Filtertasse und Filterhülse ist ein Zwischenraum gebildet. Das Wasser fließt im Betriebszustand vom Einlass durch den Zwischenraum nach unten. Dort gelangt es zum Filtern in den Innenraum der Filterhülse und fließt wieder nach oben zum Auslass. Die bekannte Anordnung verwendet einen Magneten zur Entfernung von metallischen Partikeln, der in der Strömung vor dem Filtermaterial sitzt. Wenn der am unteren Ende der Filtertasse befindlicher Ablauf geöffnet wird, wird die Filterhülse aufgrund der Druckverhältnisse nach unten bewegt. Der Übergang vom Zwischenraum zum Innenraum der Filterhülse im unteren Bereich wird blockiert. Am oberen Ende der Filterhülse wird eine Passage freigegeben, über welche Heizungswasser von oben in den Innenraum der Filterhülse fließt. Beim Rückspülen wird so die Strömung in dem Filter umgekehrt. Schmutzpartikel werden von der Bürste mitgerissen und durch den Ablauf nach unten ausgespült. Die Verwendung der Bürste kann zur Verstopfung des Filters führen und bewirkt mit der Zeit einen unerwünschten Druckabfall. Nachteilig bei der Anordnung ist es ferner, dass Heizungswasser in der Rückspülstellung nicht nur in den Filter, sondern auch zurück in den Heizkreislauf gelangen kann. Schließlich ist die Filterkapazität des Magneten leicht erschöpft, da auch grobe Partikel an dem Magneten hängen bleiben können.

EP 2 407 225 A1 offenbart einen rückspülbaren Heizungsfilter, der in die Rohrleitung eines Heizungskreislaufs eingebaut wird. Zum Rückspülen wird Wasser in umgekehrter Richtung durch den Filter geleitet. Hierzu wird werden Ventile eingesetzt, mit den Frischwasser vom Einlass zum Auslass geleitet wird. Bei dieser Anordnung muss der Heizkreislauf zum Rückspülen unterbrochen werden.

EP 2 808 070 B1 offenbart ebenfalls einen Heizungsfilter mit Rückspülung, wobei das Filtermaterial schwimmende Filterkugeln umfasst. Bekannte Heizungsfilter werden zum Reinigen mittels Kugelhähnen vom Heizkreislauf abgetrennt und der Heizkreislauf wird unterbrochen. Das ist unerwünscht. Die Kugelhähne oder sonstigen Absperrungen erfordern zusätzlichen Aufwand bei der Herstellung, Montage und Wartung des Heizungsfilters.

DE 43 15 306 C1 offenbart eine Vorrichtung zur mechanischen Reinigung von Kühlwasser. Für den Fall des Zusetzens der Siebfläche ist ein Notbetrieb mit ungefilterter Flüssigkeit über einen Bypass möglich. Hierfür sind vor dem Siebeinsatz BypassÖffnungen angeordnet, die im Normalbetrieb durch eine Schiebehülse abgedeckt sind und im Störungsfall mittels vorgespannter Verstellfedern geöffnet werden. Weder das Gehäuse, noch das Sieb sind beweglich. Bewegt wird eine das Verschlusselement bildende Schiebehülse, die über die Bypassöffnungen in dem Gehäuse geschoben wird. Ein Betrieb der Anordnung auch bei der Rückspülung ist nicht möglich.

DE 10 2015 224 138 A1 offenbart einen Hydropumpenfilter mit einem Umgehungsströmungspfad, durch welchen ungefilteres Wasser fließt, wenn der Filter sich zusetzt. Eine Rückspülung ist nicht vorgesehen.

DE 76 31 815 U1 offenbart einen Trinkwasserfilter. Die Anordnung sieht einen Hauptfilter und einen Rückspülfilter in einem Bypass vor. Ein rohrförmiger, in axialer Richtung beweglicher Schieber dient als Steuerelement. Der Schieber ist mit einem Absperrorgan verbunden.

DE 20 2015 102 475 U1 offenbart einen Rückspülfilter mit einem beweglichen Filterelement. Ein Bypasskanal ist jedoch nicht vorgesehen. Das Filterelement wird hydraulisch bewegt.

### Offenbarung der Erfindung

Es ist Aufgabe der Erfindung, einen Heizungsfilter zu schaffen, der ohne Unterbrechung des Heizkreislaufs arbeitet, der einfach und kostengünstig aufgebaut ist und leicht montiert werden kann.

Erfindungsgemäß wird die Aufgabe dadurch gelöst, dass
(c) ein Bypasskanal vorgesehen ist, welcher an dem Filterelement vorbei vom Einlass zum Auslass geführt ist;
(d) das Filterelement und/oder ein mit dem Filterelement verbundenes Verschlusselement zwischen einer Betriebsstellung und einer Bypassstellung beweglich angeordnet ist, wobei der Bypasskanal in der Betriebsstellung durch das Filterelement und/oder das Verschlusselement blockiert und in der Bypassstellung freigegeben wird; und
(e) mechanische Mittel zum Bewegen des Filterelements und/oder des Verschlusselements zwischen der Betriebsstellung und der Bypassstellung.

Der Bypass erlaubt es, dass der Heizungskreislauf auch dann nicht unterbrochen wird, wenn das Filterelement gereinigt wird. Anders als bei bekannten Heizungsfiltern, sind weder Absperrhähne für die Wartung erforderlich, noch erfolgt eine Bewegung des Filterelements durch Änderung der Druckverhältnisse.

Insbesondere kann vorgesehen sein, dass der Heizungsfilter als Rückspülfilter ausgebildet ist, bei dem Wasser in umgekehrter Richtung durch das Filterelement leitbar ist, und das Armaturengehäuse einen Ablass aufweist, durch welchen Rückspülwasser nach außen entsorgbar ist. Es ist aber auch denkbar, den Heizungsfilter im Bypassbetrieb einfach durch Entnahme des Filterelements zu reinigen.

Bei einer weiteren Ausgestaltung der Erfindung ist vorgesehen, dass der Heizungsfilter mit Heizungswasser aus dem Heizungskreislauf rückspülbar ist. Dann ist der Heizungsfilter besonders einfach ausgebildet, weil kein zusätzlicher Frischwasseranschluss erforderlich ist. Der Heizungskreislauf kann in üblicher Weise über die Heizungsnachfüllung wieder aufgefüllt werden. Auch die Montage ist erheblich einfacher.

Bei einer besonders einfachen Variante des Heizungsfilters ist das Filterelement mit einem Ventilschließkörper verbunden, der mit einem Ablass ein Ablassventil bildet, das in der Betriebsstellung schließt und in der Bypassstellung zum Entsorgen des Rückspülwassers öffnet. Der Ablass kann beispielsweise ein Ablassstutzen sein, in dem ein zylindrischer Ventilschließkörper geführt ist. Solange der Ventilschließkörper sich im Stutzen befindet, ist der Ablass geschlossen. Wenn der Ventilschließkörper aus dem Stutzen herausbewegt wird, öffnet der Ablass. Es ist aber auch möglich, einen Kugelhahn zu verwenden. Vorzugsweise ist vorgesehen, dass das Filterelement und/oder ein mit dem Filterelement verbundenes Verschlusselement zwischen der Betriebsstellung und der Bypassstellung in eine Zwischenstellung bewegbar ist, bei welcher der Bypasskanal offen und das Ablassventil geschlossen ist. Mit der Zwischenstellung wird sichergestellt, dass das Ablassventil erst öffnet, wenn die Strömung durch das Filterelement umgekehrt ist. Dadurch wird nicht mehr Heizungswasser nach außen abgegeben als nötig. Anders als bei Rückspülungen mit Frischwasser ist Heizungswasser im Heizkreislauf begrenzt. Insbesondere, wenn chemisch behandeltes Heizungswasser verwendet wird und der Sauerstoffeintrag niedrig gehalten werden soll, ist es vorteilhaft, möglichst wenig Heizungswasser zum Rückspülen zu verwenden.

In einer konkreten Ausgestaltung der Erfindung ist vorgesehen, dass das Filterelement im Wesentlichen zylindrisch ausgebildet ist und einen Innenraum bildet, in dem Magnet zum Zurückhalten von magnetisierbaren Schmutzpartikeln aus dem Heizungswasser angeordnet ist. In Heizungskreisläufen können beispielsweise Rostpartikel umlaufen, die mit dem Magneten aus dem Heizungswasser entfernt werden können.

Vorteilhafterweise ist das Filterelement mit einem Gewinde oder einer damit verbundenen Gewindehülse auf eine koaxiale, von außen rotierbare Stellspindel aufschraubbar, und die Drehbeweglichkeit des Filterelements ist begrenzt, so dass das Filterelement durch Rotation der Stellspindel in axialer Richtung bewegbar ist. Dann kann eine axiale Bewegung der Filterhülse durch Drehen eines Drehgriffs erreicht werden. Es ist aber auch möglich, die Filterhülse von der Betriebs- in die Bypass-Stellung zu drehen.

Bei einer weiteren Ausgestaltung der Erfindung ist vorgesehen, dass der Ablass von einem Ablassstutzen gebildet ist, der mit einem daran angeformten Gewindering in einen Gehäusestutzen des Armaturengehäuses eingeschraubt oder eingesetzt ist. Eine solche Anordnung lässt sich leicht herstellen. Das Filterelement und alle anderen Komponenten können durch den Gehäusestutzen in das Gehäuse eingesetzt werden.

Bei einer besonders bevorzugten Ausgestaltung der Erfindung ist vorgesehen, dass
(a) der Auslass mit einem Zentralkanal in dem Armaturengehäuse verbunden ist;
(b) der Einlass in einem um den Zentralkanal herum angeordneten Ringkanal in dem Armaturengehäuse mündet;
(c) der Zentralkanal und der Ringkanal von einer abschnittsweise rohrförmigen Wandung getrennt sind;
(d) der Bypass an dem filterseitigen Ende der rohrförmigen Wandung vorbeigeführt ist; und
(e) das untere Ende des Filterelements ein Verschlusselement aufweist, welches in der Betriebsstellung an dem filterseitigen Ende der rohrförmigen Wandung anliegt und so den Bypass verschließt und in der Bypassstellung auf der dem Zentralkanal abgewandten Seite des Ringkanals anliegt, so dass der Bypass frei ist.

Bei einer solchen Ausgestaltung wird das Filterelement lateral zur Längsachse des Zentral- und des Ringkanals bewegt. Es sind keine zusätzlichen Bohrungen oder kanalbildenden Elemente erforderlich. Das filterseitige Ende der rohrförmigen Wandung kann verdickt sein.

Ausgestaltungen der Erfindung sind Gegenstand der Unteransprüche. Ein Ausführungsbeispiel ist nachstehend unter Bezugnahme auf die beigefügten Zeichnungen näher erläutert.

### Definitionen

In dieser Beschreibung und in den beigefügten Ansprüchen haben alle Begriffe eine dem Fachmann geläufige Bedeutung, welche der Fachliteratur, Normen insbesondere DIN EN 806-1 und DIN EN 1717 und den einschlägigen Internetseiten und Publikationen, insbesondere lexikalischer Art, beispielsweise www.Wikipedia.de, www.wissen.de oder www.techniklexikon.net, der Wettbewerber, forschenden Institute, Universitäten und Verbände, beispielsweise Deutscher Verein des Gas- und Wasserfaches e.V. oder Verein Deutscher Ingenieure, dargelegt sind. Insbesondere haben die verwendeten Begriffe nicht die gegenteilige Bedeutung dessen, was der Fachmann den obigen Publikationen entnimmt.

Weiterhin werden hier folgende Bedeutungen für die verwendeten Begriffe zugrundegelegt:
- Armatur:: ist ein Bauteil zur Installation in oder an einer Rohrleitung oder anderen Fluidinstallation zum Absperren, Regeln oder Beinflussen von Stoffströmen. Eine Armatur kann einteilig oder mehrteilig ausgebildet sein und wird an einer Stelle in oder an der Rohrleitung installiert. Armaturen sind beispielsweise und nicht abschließend: Anschlussvorrichtungen, Anschlussarmaturen, Hauptabsperrarmaturen, Wartungsarmaturen, Drosselarmaturen, Entnahmestellen, Entnahmearmaturen, Entleerungsarmaturen, Sicherungsarmaturen, Sicherheitsarmaturen und Stellarmaturen.
- Auslass: ist eine ablaufseitige Öffnung in einem Gehäuse, aus welcher ein Stoffstrom herausfließen kann. Die Öffnung kann insbesondere an eine Rohrleitung oder eine weitere Armatur angeschlossen sein oder frei zur Atmosphäre hin öffnen.
- axial: ist die Richtung der Rotationsachse von ganz oder teilweise rotationssymmetrischen Bauteilen, wie etwas Rohren oder langgestreckten Gehäusen. Bei Bauteilen ohne Rotationssymmetrie ist es die Hauptströmungsrichtung in einem Bauteilabschnitt.
- Bohrung: ist jede Art von Verbindung zweier Hohlräume, sowie Sacklöcher.
- Druck: Kraft pro Flächeneinheit
- Einlass: ist eine zulaufseitige Öffnung in einem Gehäuse, in welchen ein Stoffstrom hineinfließen kann. Die Öffnung kann insbesondere an eine Rohrleitung oder eine weitere Armatur angeschlossen sein oder frei zur Atmosphäre hin öffnen.
- Feder: elastisches Bauteil, dass sich verformen lässt, insbesondere aber nicht ausschließlich metallische Schraubenfeder
- Filter: ist eine Einrichtung, mit welcher Feststoffe aus einem Fluidstrom zurückgehalten werden.
- Fluid: alle Stoffe, die durch geringe Kräfte deformiert werden können. Fluide werden unterteilt in Flüssigkeiten und Gase.
- Gehäuse: Begrenzung für Stoffe, Bauteile, Instrumente und Messgeräte nach außen. Ein Gehäuse kann einteilig oder aus mehreren verbundenen Gehäuseteilen mehrteilig ausgebildet sein und aus einem oder mehreren Materialien bestehen.
- Griff: nach außen ragendes Bauteil zum manuellen Halten oder Bewegen.
- Motor: Maschine, die mechanische Arbeit verrichtet, indem sie eine Energieform, z.B. thermische, chemische oder elektrische Energie, in Bewegungsenergie umwandelt.
- Mutter: Maschinenelement zur Herstellung lösbarer Verbindungen. Die Mutter ist ein Hohlkörper mit Innengewinde.
- radial: senkrecht zu einer axialen Richtung.
- Rohr: Hohlkörper aus zylindrischen Abschnitten. Dient üblicherweise als Rohrleitung.
- Rückspülen: Durchströmen einer Komponente oder von Filtermaterial in umgekehrter Richtung und Ablassen des Spülmediums nach außen
- Rückspülfilter: Filter, welcher durch Rückspülen gereinigt wird.
- Stutzen: Rand oder Übergangsstück an einer Öffnung.
- Ventil: Bauteil zur Absperrung oder Regelung des Durchflusses von Fluiden.
- Ventilschließkörper: Bauteil, welches zum Schließen eines Ventils geeignet ist.

### Kurze Beschreibung der Zeichnungen

- Fig.1: ist ein Vertikalschnitt durch eine Heizungsfilteranordnung in der Betriebsstellung.
- Fig.2: ist ein Horizontalschnitt durch die Heizungsfilteranordnung aus Figur 1 entlang der Schnittebene E-E.

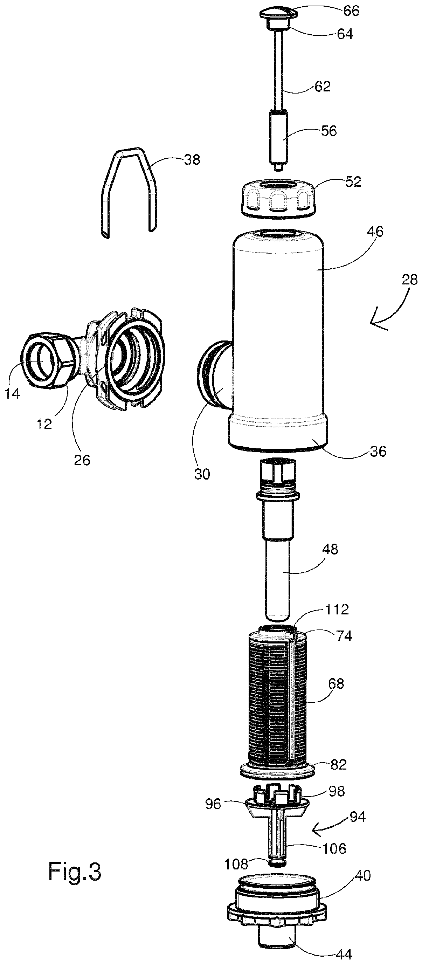

- Fig.3: ist eine Explosionsdarstellung der Heizungsfilteranordnung aus Figur 1.
- Fig.4: zeigt die Heizungsfilteranordnung aus Figur 1 in einer Rückspülstellung.
- Fig.5: zeigt ein Detail aus Figur 4.
- Fig.6: ist eine perspektivische Ansicht eines Filterelements für eine Anordnung aus Figur 1 mit Verschlusselement.
- Fig.7: zeigt die Heizungsfilteranordnung aus Figur 1 in einer Zwischenstellung.
- Fig.8: ist eine perspektivische Explosionsdarstellung einer Stellspindel mit Schaft und Drehgriff für eine Heizungsanordnung aus Figur 1.

### Beschreibung des Ausführungsbeispiels

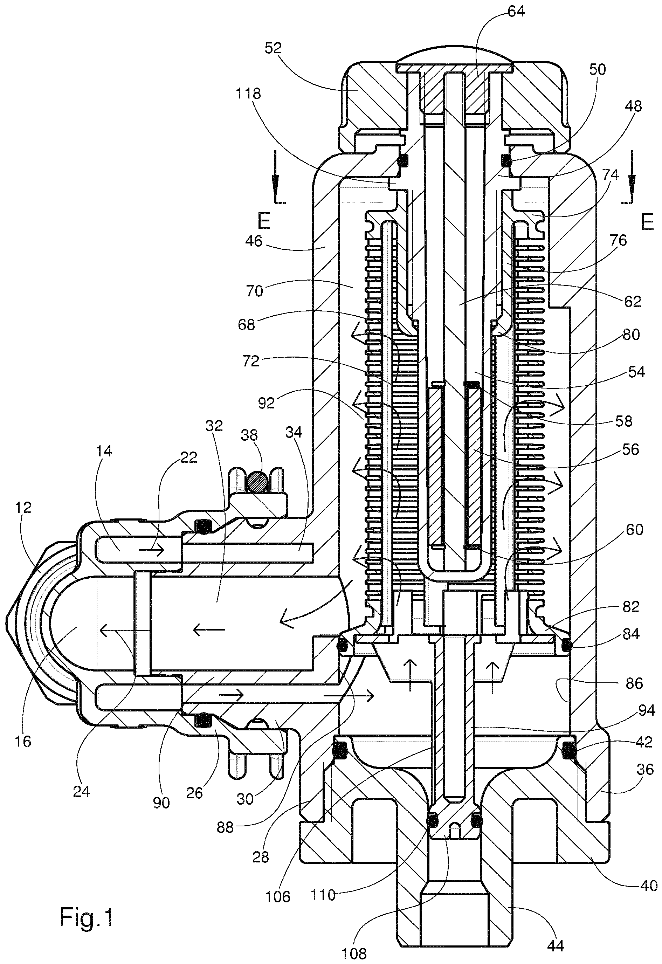

Figur 1 zeigt eine allgemein mit 10 bezeichnete Filter-Anordnung. Die Filteranordnung 10 ist ein Heizungsfilter. Der Heizungsfilter ist für die Reinigung von Heizungswasser in Heizkreisläufen vorgesehen. Es ist aber auch möglich, den Filter in anderen Fluidinstallationen, etwa Kühlkreisläufen oder Trinkwasserinstallationen einzusetzen.

Die Filteranordnung 10 umfasst eine Anschlussarmatur 12. Die Anschlussarmatur 12 hat einen Einlass 14 und einen Auslass 16. Die Anschlussarmatur 12 kann mit Muttern an beliebiger Stelle in die Rohrleitung eines Heizungskreislaufs (nicht dargestellt) installiert werden. Im vorliegenden Fall ist die Anschlussarmatur 12 aus Messing oder einem anderen wärmefesten Metall gefertigt. Heizungswasser fließt in Richtung des Pfeils 22 in die Armatur 12 hinein und in Richtung des Pfeils 24 aus der Armatur 12 hinaus. Die Anschlussarmatur 12 weist einen Verbindungsstutzen 26 auf. In den Verbindungsstutzen 26 wird ein Armaturengehäuse 28 eingesteckt. Hierzu ist das Armaturengehäuse 28 mit einem Stutzen 30 versehen. Im vorliegenden Ausführungsbeispiel ist das Armaturengehäuse 28 aus Kunststoff gefertigt. Es ist aber auch möglich, ein Armaturengehäuse 28 aus Metall zu verwenden.

Die Verbindung zwischen Verbindungsstutzen 26 und Stutzen 30 erfolgt über einen Zentralkanal 32 und einen koaxial darum herum angeordneten Ringkanal 34. Der Zentralkanal 32 ist mit dem Auslass 16 verbunden. Der Ringkanal 34 ist mit dem Einlass 14 verbunden. Der Stutzen 30 ist in den Verbindungsstutzen 26 eingesteckt und mit einer Klammer 38 in axialer Richtung gesichert. Dadurch ist das Armaturengehäuse 28 frei drehbar und kann entsprechend die Installationsbedingungen in gewünschter Weise gegenüber der Rohrleitung orientiert werden. Die Anordnung ist immer in gleicher Weise orientiert, kann aber mit quasi beliebig orientierten Rohrleitungen verwendet werden. Statt der gezeigten Konfiguration ist es auch möglich, eine Flanschverbindung üblicher Bauweise oder eine andere Verbindungsart zu verwenden. Diese ist dann nicht drehbar, sondern wird in einer von vier möglichen Orientierungen installiert.

Das Armaturengehäuse 28 weist einen Stutzen 36 auf. Im vorliegenden Ausführungsbeispiel ist der Stutzen 36 nach unten offen. Der Stutzen 36 ist mit einem Innengewinde 38 versehen. In das Innengewinde 38 ist ein Gewindering 40 mit einer Dichtung 42 eingeschraubt. Der Gewindering 40 bildet einen koaxialen, nach unten ragenden Ablassstutzen 44. Der Ablassstutzen 44 ist mittig an den Gewindering 40 angeformt und erstreckt sich über den unteren Rand des Gewinderings 40 hinaus. Der Ablassstutzen 44 ist nach unten orientiert.

An das Gehäuse 28 bildet koaxial zum Stutzen 36 ein Filtergehäuse 46. Das Filtergehäuse 46 ist im Wesentlichen zylindrisch und erstreckt sich senkrecht nach oben. Am oberen Ende weist das Filtergehäuse 46 eine Öffnung auf. Durch die Öffnung erstreckt sich koaxial eine Stellspindel 48 mit einer Dichtung 50. Die Stellspindel 48 ragt nach oben aus dem Filtergehäuse 46 heraus. Auf den herausragenden Teil der Stellspindel 48 ist formschlüssig ein Drehgriff 52 aufgesteckt. Mit dem Drehgriff 52 kann die Stellspindel 48 von Hand rotiert werden.

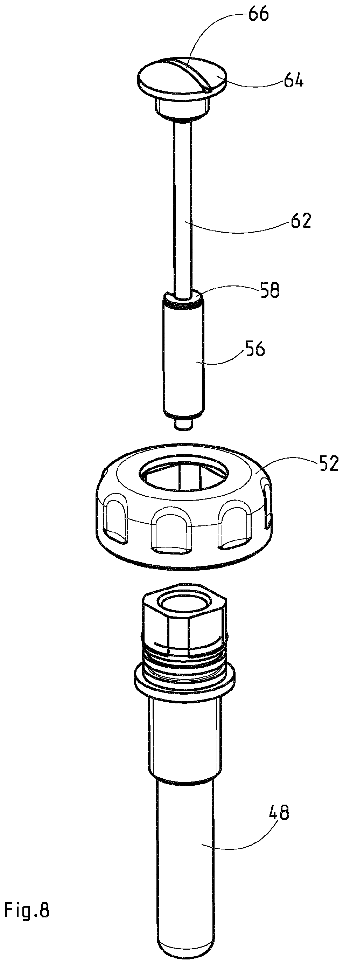

Nach unten erstreckt sich die Stellspindel 48 in axialer Richtung bis zum unteren Ende des Filtergehäuses 46. Die Stellspindel 48 ist innen hohl. In dem hohlen Innenraum 54 der Stellspindel 48 ist ein Magnet 56 angeordnet. Der Magnet 56 ist mit Sicherungsringen 58 und 60 auf einem langgestreckten Schaft 62 gehalten. Dies ist in Figur 8 gut zu erkennen. Der Schaft 62 weist am oberen Ende einen Kopf 64 auf. Eine Nut 66 ermöglicht den Eingriff eines Schraubendrehers oder anderen Werkzeugs zum Drehen des Schafts 62.

In dem Filtergehäuse 46 sitzt koaxial ein im Wesentlichen zylindrisches Filterelement 68. Das Filterelement 68 weist eine Vielzahl von beabstandeten Ringen auf, die mit Längsrippen in axialer Richtung miteinander verbunden sind. Auf den Ringen ist ein Sieb angeordnet. Wasser, das in radialer Richtung durch die Zwischenräume des Filterelements 68 fließt, wird entsprechend gefiltert. Die Schmutzpartikel bleiben an dem Sieb und den Ringen hängen.

Das Filterelement 68 erstreckt sich koaxial um die Stellspindel 48 herum innerhalb des Filtergehäuses 46. Zwischen dem Filterelement und der Innenwandung des Filtergehäuses 46 ist ein äußerer Ringraum 70 gebildet. Zwischen dem Filterelement 68 und der Stellspindel 48 ist ein innerer Ringraum 72 gebildet.

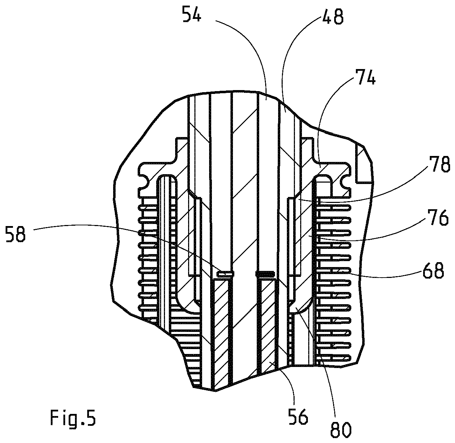

Am oberen Ende bildet das Filterelement 68 einen nach innen ragenden Rand 74. Dies ist in Figur 5 noch einmal im Detail dargestellt. An die Innenseite des Randes 74 ist koaxial eine im Wesentlichen zylindrische Hülse 76 angeformt. Die Hülse 76 weist ein Innengewinde 78 auf. Mit dem Innengewinde 78 der Hülse 76 ist das Filterelement 68 auf die Stellspindel 48 aufgeschraubt. Hierfür ist die Stellspindel 48 mit einem Außengewinde versehen. Unterhalb des Außengewindes ist das Ende 80 der Hülse 76 nach innen gekrümmt. Damit wird einerseits das Gewinde 78 vor Verschmutzung geschützt. Andererseits können Schmutzpartikel, die außen auf der Stellspindel 48 haften, mit dem gekrümmten Ende 80 auf nachstehend beschriebene Weise abgeschabt werden.

Am unteren Ende bildet das Filterelement 68 einen Rand 82. Der Rand 82 sitzt mit einer Dichtung 84 einerseits an der Innenwandung 86 des Gehäuses 28. Andererseits liegt der Rand 82 an einem Ende 88 einer Trennwandung 90 zwischen zentralem Auslasskanal 32 und darum angeordneten Ringkanal 34 an. Dabei ist das Ende 88 verbreitert und erstreckt sich etwas weiter nach oben. Der Rand 82 und die Dichtung 84 trennen also einen Übergang zwischen Ringkanal 34 und Zentralkanal 32.

Wasser fließt also vom Ringkanal 34 in Richtung der Pfeile 92 von unten nach oben innen in das Filterelement 68 hinein. Vom inneren Ringraum 72 fließt das Wasser nach außen durch das Filterelement 68 in den äußeren Ringraum 70. Dabei bleiben Schmutzpartikel am Filterelement 68 hängen. Magnetisierbare Schmutzpartikel werden vom Magneten 56 angezogen. Diese bleiben außen an der Stellspindel 48 hängen. Der äußere Ringraum 70 ist mit dem Zentralkanal 32 verbunden. Vom Zentralkanal 32 fließt das gefilterte Wasser zum Auslass 16.

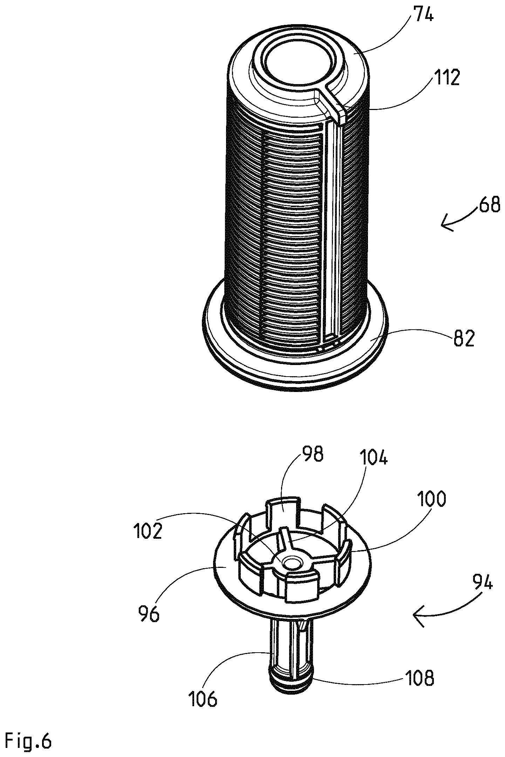

In das Filterelement 68 ist von unten ein Verschlusselement 94 eingeklipst. Das Verschlusselement 94 ist in Figur 6 noch einmal separat dargestellt. Das Verschlusselement 94 weist einen Ring 96 auf. An den Ring 96 ist ein Kranz aus Vorsprüngen 98 angeformt. An die Vorsprünge 98 sind Nasen 100 angeformt. Mit den Nasen 100 wird das Verschlusselement 94 von unten in den unteren Ring 82 des Filterelements 68 eingeklipst.

Ein innerer Ring 102 ist über Stege 104 mit dem Ring 96 verbunden. Von dem Ring 102 erstrecken sich Stege 106 in axialer Richtung nach unten. Die Stege 106 halten einen Ventilschließkörper 108 mit einer Dichtung 110. Die Dichtung 110 ist in Figur 1 zu erkennen. Der Ventilschließkörper 108 hat einen Außendurchmesser, der dem Innendurchmesser des Ablassstutzens 44 entspricht. In der in Figur 1 gezeigten Betriebsstellung verschließt der Ventilschließkörper 108 den Ablassstutzen 44. Es kann kein Wasser nach unten abfließen.

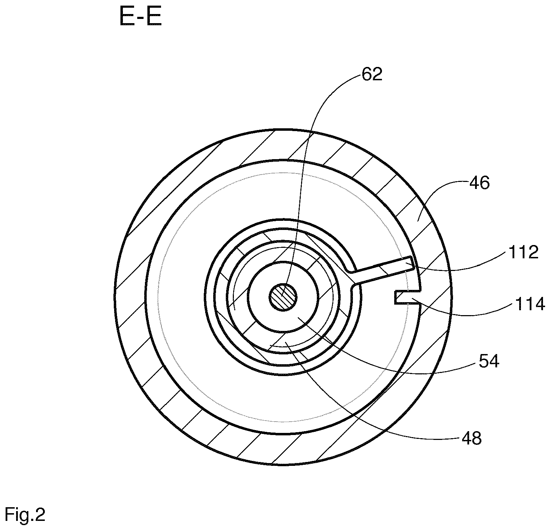

Oberhalb des Randes 74 weist die mit dem Filterelement 68 verbundene Hülse 76 einen nach außen ragenden Mitnehmer 112 auf. Der Mitnehmer 112 ist im Schnitt E-E in Figur 2 gut zu erkennen. Auf gleicher Höhe ist das Filtergehäuse 46 an der Innenwandung mit einem Anschlag 114 versehen. Der Anschlag 114 erlaubt eine Drehung des Filterelements 68 nur, bis der Mitnehmer 112 auf den gehäusefesten Anschlag 114 trifft. Eine weitere Drehung des Filterelements 68 wird blockiert. Dann wird das mit dem Griff 52 auf die Stellspindel 48 ausgeübte Drehmoment in eine Axialbewegung des Filterelements 68 umgewandelt. Das Filterelement 68 wird quasi an der Stellspindel 48 heruntergeschraubt.

Die Anordnung arbeitet wie folgt:
Figur 1 zeigt die Betriebsstellung der Anordnung. Wasser fließt vom Einlass 14 durch den Ringkanal 34 in Richtung des Pfeils 22 in das Gehäuse 28. Dort fließt es nach oben in das Filtergehäuse 46. Im Filtergehäuse 46 fließt das Wasser in Richtung der Pfeile 92 von innen nach außen durch das Filterelement 68. Magnetisierbare Schmutzpartikel werden vom Magneten 56 zurückgehalten und haften außen an der Stellspindel 48. Das gefilterte Wasser fließt vom äußeren Ringraum 70 nach unten durch den Zentralkanal 32 zum Auslass 16.

In der Betriebsstellung, die in Figur 1 gezeigt ist, ist der Ablassstutzen 44 mit dem Ventilschließkörper 108 verschlossen. Der Ventilschließkörper 108 bildet mit dem übrigen Verschlusselement 94 und dem Filterelement 68 eine axialverschiebliche Baugruppe. Die Baugruppe ist in der Betriebsstellung in einer oberen Position. Dabei schlägt der obere Rand der mit dem Filterelement 68 verbundenen Hülse 76 an einem Ringvorsprung 118 der Stellspindel an. Der Ringvorsprung 118 definiert auch die Position der Stellspindel, wenn diese bei der Montage von unten in das Filtergehäuse 46 eingesetzt wird. Die Stellspindel verändert ihre axiale Position nicht.

Mit der Zeit setzt sich das Filterelement 68 mit Schmutzpartikeln zu. Dann kann es durch Rückspülen gereinigt werden. Beim Rückspülen wird das Filterelement 68 in umgekehrter Richtung mit Heizungswasser durchflossen. Schmutzpartikel werden mitgerissen. Das Rückspülwasser wird nach unten durch den Ablassstutzen 44 entsorgt. Zum Umkehren der Strömung durch das Filterelement wird der Handgriff 52 rotiert. Mit dem Handgriff 52 rotiert auch die Stellspindel 48. Das mit der Hülse 76 auf die Stellspindel 48 aufgeschraubte Filterelement 68 folgt der Rotation bis der Mitnehmer 112 auf den Anschlag 114 trifft. Bei einer weiteren Rotation der Stellspindel 48 wird das Filterelement 68 nicht mehr rotiert, sondern in axialer Richtung nach unten bewegt.

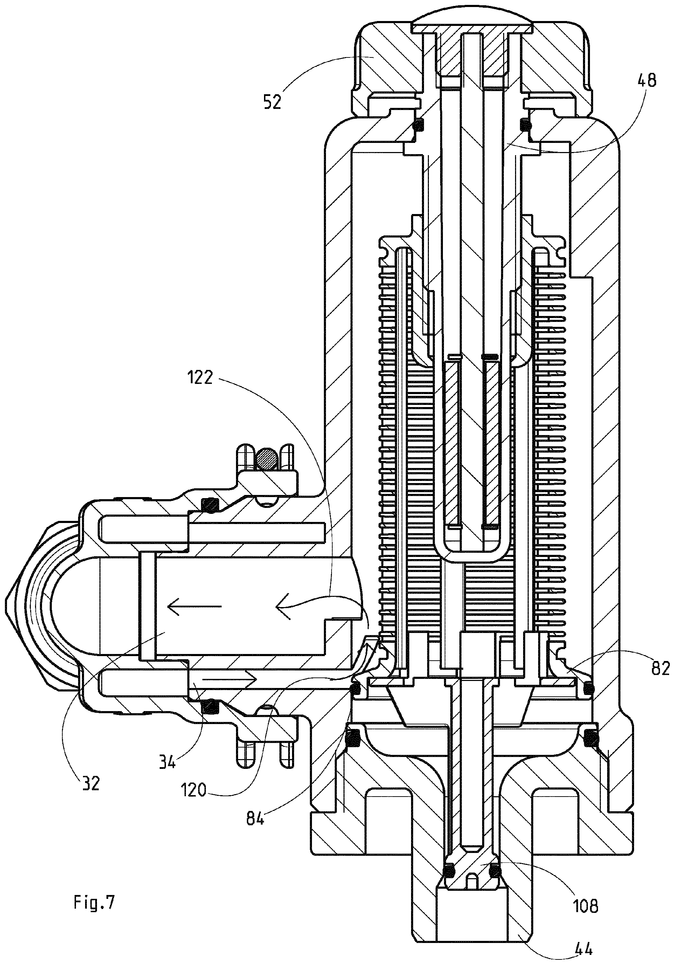

Bei der Bewegung des Filterelements 68 nach unten wird zunächst die in Figur 7 gezeigte Zwischenstellung erreicht. In der Zwischenstellung ist der Ablassstutzen 44 noch vom Ventilschließkörper 108 verschlossen. Es fließt noch kein Wasser nach außen ab. Der Rand 82 und die Dichtung 84 trennen aber den Übergang 120 zwischen Ringkanal 34 und Zentralkanal 32 nicht mehr. Der Übergang 120 bildet einen Bypass und ist frei, so dass Wasser direkt am Filterelement 68 vorbei vom Einlass zum Auslass fließen kann. Dies ist durch Pfeile 122 illustriert. Die Zirkulation im Heizungskreislauf wird durch den Bypass zu keinem Zeitpunkt unterbrochen.

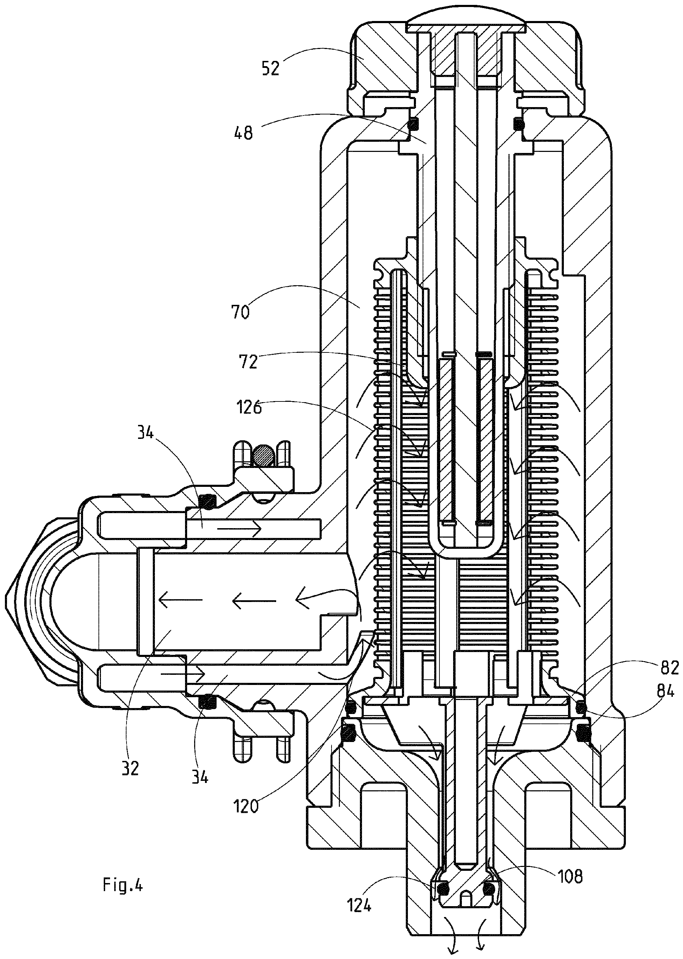

Bei weiterer Drehung des Handgriffs 52 wird die in Figur 4 gezeigte Rückspülstellung erreicht. In dieser Stellung ist die Baugruppe aus Filterelement 68 und Verschlusselement 94 in der untersten Stellung. Der Rand 82 trifft auf einen oberen Rand des Verschlussteils 40. Entsprechend ist eine weitere Bewegung nach unten nicht möglich. Der Ventilschließkörper 108 ist in einem verbreiterten Bereich des Ablasses 44, so dass Wasser nach unten abfließen kann. Dies ist durch Pfeile 124 illustriert.

Das Wasser fließt durch den Ringkanal 34 in das Filtergehäuse 46. Dieser ist über den Übergang 120 mit dem äußeren Ringkanal 70 verbunden. Vom äußeren Ringkanal 70 fließt das Wasser in der Rückspülstellung in umgekehrter Richtung durch das Filterelement 68 in den inneren Ringkanal 72. Dies ist durch Pfeile 126 illustriert. Dabei werden Schmutzpartikel mitgerissen. Das Rückspülwasser mit den Schmutzpartikeln fließt nach unten durch den Ablassstutzen 44 ab und kann dort entsorgt werden. Dies ist durch Pfeile 124 illustriert.

Der direkte Übergang 120 vom Ringkanal 34 zum Zentralkanal 32 ist dabei weiter offen. Der Heizungskreislauf wird also auch bei der Rückspülung nicht unterbrochen. Der Rand 82 mit der Dichtung 84 unterbricht aber in dieser Stellung die Verbindung vom Ringkanal 34 zum Ablassstutzen 44. Entsprechend kann das Rückspülwasser nicht zurück in den Heizungskreislauf gelangen.

Bei der Abwärtsbewegung des Filterelements 68 werden die außen an der Stellspindel anhaftenden Schmutzpartikel mit dem nach innen gebogenen Rand 80 der Hülse 76 abgeschabt. Diese werden zusammen mit dem Rückspülwasser entsorgt.

Die beschriebene Anordnung hat mehrere Vorteile gegenüber bekannten Anordnungen. Durch Verwendung eines Drehflansches ist sie unabhängig von der Einbaulage. Magnetisierbare Schmutzpartikel werden sauber abgeschabt ohne mit den Händen Kontakt zu haben. Es sind keinerlei Vor- und Nachabsperrungen, etwa Kugelhähne notwendig. Während der Wartung wird die Strömung in der Heizungsanlage nicht unterbrochen. Das Filterelement wird anders als bekannte Rückspülanordnungen nicht hydraulisch, sondern mechanisch bewegt. Es versteht sich, dass statt einer manuellen Rotation auch eine motorgesteuerte Rotation denkbar ist. Die Anordnung ist besonders einfach aufgebaut und kostengünstig in der Herstellung.

Die vorstehende Erfindung wurde hier anhand eines konkreten Ausführungsbeispiels beschrieben. Die Beschreibung dient jedoch nur zur Illustration der Erfindung. Der Umfang der Erfindung lässt eine Vielzahl von Variationen zu, die ausschließlich vom Schutzbereich der beigefügten Ansprüche bestimmt werden. So sind bestimmte Merkmale hinsichtlich Konstruktion, Material, Anordnung und Aufbau des Ausführungsbeispiels lediglich sinnvolle Ausgestaltungen. Die Anschlüsse können jede beliebige, dem Fachmann bekannte Ausgestaltung annehmen. Dies gilt für alle Merkmale und deren Kombinationen, solange in den Ansprüchen nicht eine bestimmte Kombination von Merkmalen als erfindungswesentlich offenbart ist.

## Patentansprüche

1. Heizungsfilter (10) zum Herausfiltern von Partikeln aus Heizungswasser in einem Heizkreislauf enthaltend:
(a) ein Armaturengehäuse (12, 28) mit einem Einlass (14) und einem Auslass (16) zum Einbau in eine Rohrleitung des Heizkreislaufs; und
(b) ein strömungsmäßig zwischen Einlass und Auslass angeordnetes Filterelement (68);
**dadurch gekennzeichnet, dass**
(c) ein Bypasskanal (120) vorgesehen ist, welcher an dem Filterelement (68) vorbei vom Einlass (14) zum Auslass (16) geführt ist;
(d) das Filterelement (68) und/oder ein mit dem Filterelement verbundenes Verschlusselement (82, 84) zwischen einer Betriebsstellung und einer Bypassstellung beweglich angeordnet ist, wobei der Bypasskanal (120) in der Betriebsstellung durch das Filterelement und/oder das Verschlusselement blockiert und in der Bypassstellung freigegeben wird; und
(e) mechanische Mittel (52, 48) zum Bewegen des Filterelements (68) und/oder des Verschlusselements (82, 84) zwischen der Betriebsstellung und der Bypassstellung.

2. Heizungsfilter (10) nach Anspruch 1, **dadurch gekennzeichnet, dass** der Heizungsfilter als Rückspülfilter ausgebildet ist, bei dem Wasser in umgekehrter Richtung durch das Filterelement (68) leitbar ist, und das Armaturengehäuse (28) einen Ablass (44) aufweist, durch welchen Rückspülwasser nach außen entsorgbar ist.

3. Heizungsfilter (10) nach Anspruch 2, **dadurch gekennzeichnet, dass** der Heizungsfilter mit Heizungswasser aus dem Heizungskreislauf rückspülbar ist, welches über den Auslass (16) aus der Rohrleitung des Heizkreislaufs in umgekehrter Richtung durch das Filterelement leitbar ist.

4. Heizungsfilter (10) nach Anspruch 3, **gekennzeichnet durch** einen mit dem Filterelement (68) verbundenen Ventilschließkörper (108), der mit einem Ablass (44) ein Ablassventil bildet, das in der Betriebsstellung schließt und in der Bypassstellung zum Entsorgen des Rückspülwassers öffnet.

5. Heizungsfilter (10) nach Anspruch 4, **dadurch gekennzeichnet, dass** das Filterelement (68) und/oder ein mit dem Filterelement verbundenes Verschlusselement (82, 84) zwischen der Betriebsstellung und der Bypassstellung in eine Zwischenstellung bewegbar ist, bei welcher der Bypasskanal (120) offen und das Ablassventil (44, 108) geschlossen ist.

6. Heizungsfilter nach einem der vorgehenden Ansprüche, **dadurch gekennzeichnet, dass** das Filterelement (68) im Wesentlichen zylindrisch ausgebildet ist und einen Innenraum bildet, in dem Magnet (56) zum Zurückhalten von magnetisierbaren Schmutzpartikeln aus dem Heizungswasser angeordnet ist.

7. Heizungsfilter nach einem der vorgehenden Ansprüche, **dadurch gekennzeichnet, dass** das Filterelement (68) mit einem Gewinde oder einer Gewindehülse (76) auf eine koaxiale, von außen rotierbare Stellspindel aufschraubbar ist, und die Drehbeweglichkeit des Filterelements begrenzt ist, so dass das Filterelement durch Rotation der Stellspindel in axialer Richtung bewegbar ist.

8. Heizungsfilter nach einem der vorgehenden Ansprüche, **dadurch gekennzeichnet, dass** der Ablass (44) von einem Ablassstutzen gebildet ist, der mit einem daran angeformten Gewindering (40) in einen Gehäusestutzen (36) des Armaturengehäuses eingeschraubt oder eingesetzt ist.

9. Heizungsfilter (10) nach einem der vorgehenden Ansprüche, **dadurch gekennzeichnet, dass**
(a) der Auslass (16) mit einem Zentralkanal (32) in dem Armaturengehäuse (12, 28) verbunden ist;
(b) der Einlass (14) in einem um den Zentralkanal (32) herum angeordneten Ringkanal (34) in dem Armaturengehäuse (12, 28) mündet;
(c) der Zentralkanal (32) und der Ringkanal (34) von einer abschnittsweise rohrförmigen Wandung (90) getrennt sind;
(d) der Bypass (120) an dem Filterseitigen Ende (88) der rohrförmigen Wandung (90) vorbeigeführt ist; und
(e) das untere Ende (82) des Filterelements (68) ein Verschlusselement (82, 84) aufweist, welches in der Betriebsstellung an dem filterseitigen Ende (88) der rohrförmigen Wandung (90) anliegt und so den Bypass (120) verschließt und in der Bypassstellung auf der dem Zentralkanal (32) abgewandten Seite des Ringkanals (34) anliegt, so dass der Bypass (120) frei ist.

10. Heizungsfilter nach Anspruch 9, **dadurch gekennzeichnet, dass** das filterseitige Ende (88) der rohrförmigen Wandung (90) verdickt ist.

## Claims

1. Filter (10) for heating circuits for filtering particles from heating water in a heating circuit, comprising:
(a) a fitting housing (12, 28) with an inlet (14) and an outlet (16) for installation in a pipe of the heating circuit; and
(b) a filter element (68) provided in the flow between the inlet and the outlet;
**characterized in that**
(c) a bypass channel (120) is provided from the inlet (14) to the outlet (16) bypassing the filter element (68);
(d) the filter element (68) and/or a closing element (82, 84) connected to the filter element is moveably arranged between an operating position and a bypass position, wherein the bypass channel (120) is blocked by the filter element and/or the closing element in the operating position and released in the bypass position; and
(e) mechanical means (52, 48) are provided for moving the filter element (68) and/or the closing element (82, 84) between the operating position and the bypass position.

2. Filter (10) for heating circuits according to claim 1, **characterized in that** the heating filter is a backflow filter where water flows through the filter element (68) in the opposite direction and the fitting housing (28) is provided with an outlet (44) for releasing the backflow water towards the outside.

3. Filter (10) for heating circuits according to claim 2, **characterized in that** the filter for heating circuits is backflushed with heating water from the heating circuit, which flows from the outlet (16) from the pipe in the heating circuit in the opposite direction through the filter element.

4. Filter (10) for heating circuits according to claim 3, **characterized by** a valve closing body (108) connected to the filter element (68) forming an outlet valve together with the outlet (44) which closes in the operating position and opens in the bypass position for releasing the backflow water.

5. Filter (10) for heating circuits according to claim 4, **characterized in that** the filter element (68) and/or a closing element (82, 84) connected to the filter element is moveable to an intermediate position between the operating position and the bypass position where the bypass channel (120) is open and the outlet valve (44, 108) is closed.

6. Filter (10) for heating circuits according to any of the preceding claims, **characterized in that** the filter element (68) is essentially cylindrical and forms an interior space accommodating a magnet (56) for retaining magnetic dirt particles from the heating water.

7. Filter (10) for heating circuits according to any of the preceding claims, **characterized in that** the filter element (68) has a thread or a threaded sleeve (76) adapted to be screwed on a coaxial spindle which can be rotated from the outside and the rotational moveability of the filter element is limited whereby the filter element is moveable in an axial direction by rotating the spindle.

8. Filter (10) for heating circuits according to any of the preceding claims, **characterized in that** the outlet (44) is formed by an outlet socket having an integrated threaded ring (40) adapted to be screwed or inserted into a housing socket (36) of the fitting housing.

9. Filter (10) for heating circuits according to any of the preceding claims, **characterized in that**
(a) the outlet (16) is connected to a central passage (32) in the fitting housing (12, 28);
(b) the inlet (14) extends into an annular passage (34) arranged in the fitting housing (12, 28) around the central passage (32);
(c) the central passage (32) and the annular passage (34) are separated by a partly tubular wall (90);
(d) the bypass (120) bypasses the filter side end (88) of the tubular wall (90); and
(e) the lower end (82) of the filter element (68) comprises a closing element (82, 84) which abuts the filter side end (88) of the tubular wall (90) in the operating position and thereby blocks the bypass (120) and abuts the side of the annular passage (34) remote from the central passage (32) in the bypass position whereby the bypass is released.

10. Filter (10) for heating circuits according to claim 9, **characterized in that** the filter side end (88) of the tubular wall is thickened.

## Revendications

1. Filtre pour chauffage (20) destiné à filtrer des particules provenant de l'eau de chauffage contenue dans un circuit de chauffage ; comprenant
(a) un boîtier de pièce de robinetterie (12, 28) muni d'une entrée (14) et d'une sortie (16) et destiné à être installé à l'intérieur d'un conduit du circuit de chauffage ; et,
(b) un élément de filtre (68) disposé dans le courant entre l'entrée et la sortie ;
**caractérisé en ce que**
(c) il est prévu un canal de dérivation (120) s'étendant de l'entrée (14) jusqu'à la sortie (16) en passant devant l'élément de filtre (68) ;
(d) l'élément de filtre (68) et/ou un élément de fermeture (82, 84) relié à l'élément de filtre est disposé entre une position de fonctionnement et une position de dérivation de manière à pouvoir se déplacer, le canal de dérivation (120) étant bloqué en position de fonctionnement par l'élément de filtre et/ou l'élément de fermeture et étant dégagé en position de dérivation ; et
(e) il est prévu des moyens mécaniques (52, 48) destinés à déplacer l'élément de filtre (68) et/ou l'élément de fermeture (82, 84) entre la position de fonctionnement et la position de dérivation.

2. Filtre de chauffage (10) selon la revendication 1, **caractérisé en ce que** le filtre de chauffage est réalisé sous forme de filtre à lavage à contre-courant pour lequel de l'eau peut être guidée à travers l'élément de filtre (68) en sens inverse, et le boîtier de pièce de robinetterie (28) présente une sortie (44) permettant d'éliminer vers l'extérieur l'eau de lavage à contre-courant.

3. Filtre de chauffage (10) selon la revendication 2, **caractérisé en ce que** le filtre de chauffage peut être lavé à contre-courant à l'aide de l'eau de chauffage provenant du circuit de chauffage et pouvant être guidée à travers l'élément de filtre par la sortie (16) hors du conduit du circuit de chauffage en sens inverse.

4. Filtre de chauffage (10) selon la revendication 3, **caractérisé par** un corps de fermeture à vanne (108) relié à l'élément de filtre (68) qui forme avec une évacuation (44) une vanne d'évacuation qui se ferme en position de fonctionnement et s'ouvre en position de dérivation afin d'éliminer l'eau de lavage à contre-courant.

5. Filtre de chauffage (10) selon la revendication 4, **caractérisé en ce que** l'élément de filtre (68) et/ou un élément de fermeture (82, 84) relié à l'élément de filtre peut se déplacer entre la position de fonctionnement et la position de dérivation dans une position intermédiaire dans laquelle le canal de dérivation (120) est ouvert et la vanne d'évacuation (44, 108) est fermée.

6. Filtre de chauffage selon l'une quelconque des revendications précédentes, **caractérisé en ce que** l'élément de filtre (68) est réalisé essentiellement en forme de cylindre et forme un espace intérieur dans lequel est disposé un aimant (56) destiné à retenir les particules polluantes pouvant être magnétisées provenant de l'eau de chauffage.

7. Filtre de chauffage selon l'une quelconque des revendications précédentes, **caractérisé en ce que** l'élément de filtre (68) peut être vissé à l'aide d'un filetage ou d'une douille filetée (76) sur une vis de réglage coaxiale pouvant tourner vers l'extérieur, et la capacité de rotation de l'élément de filtre est limitée de sorte que l'élément de filtre peut se déplacer dans le sens axial grâce à la rotation de la vis de réglage.

8. Filtre de chauffage selon l'une quelconque des revendications précédentes, **caractérisé en ce que** l'évacuation (44) est formée d'un embout d'évacuation vissé sur un embout de boîtier (36) du boîtier de la pièce de robinetterie ou inséré dans celui-ci à l'aide d'une bague filetée (40) formée sur l'embout d'évacuation.

9. Filtre de chauffage (10) selon l'une quelconque des revendications précédentes, **caractérisé en ce que**
(a) la sortie (16) est reliée, dans le boîtier de pièce de robinetterie (12, 28), à un canal central (32) ;
(b) l'entrée (14) débouche, dans le boîtier de pièce de robinetterie (12, 28), dans un canal annulaire (34) disposé autour du canal central (32) ;
(c) le canal central (32) et le canal annulaire (34) sont séparés par une paroi (90) de forme tubulaire par section ;
(d) le canal de dérivation (120) passe devant l'extrémité située côté filtre (88) de la paroi (90) de forme tubulaire ; et
(e) l'extrémité inférieure (82) de l'élément de filtre (68) présente un élément de fermeture (82, 84) qui est adjacent en position de fonctionnement à l'extrémité située côté filtre (88) de la paroi (90) de forme tubulaire et ferme ainsi le canal de dérivation et est, en position de dérivation, adjacent au côté du canal annulaire (34) opposé au canal central (32) de sorte que le canal de dérivation (120) est dégagé.

10. Filtre de chauffage selon la revendication 9, **caractérisé en ce que** l'extrémité située du côté filtre (88) de la paroi (90) de forme tubulaire est plus épaisse.
